# EUROPÄISCHE PATENTANMELDUNG

(11) **EP 4 317 631 A1**
(43) Veröffentlichungstag der Anmeldung: **07.02.2024**
(21) Anmeldenummer: 22188045.3
(22) Anmeldetag: 01.08.2022
(51) Int. Cl.: E04G 15/06, F16L 5/02, F16L 5/04, H02G 3/22

(54) **MODULARES BAUKASTENSYSTEM ZUM HERSTELLEN UND ABDICHTEN EINER LEITUNGSDURCHFÜHRUNG**

(71) Anmelder: Hilti Aktiengesellschaft, 9494 Schaan (LI)
(72) Erfinder: Förg, Christian, 86807 Buchloe (DE)
(74) Vertreter: Hilti Aktiengesellschaft Corporate Intellectual Property

(57) **Zusammenfassung**

Die Erfindung betrifft ein modulares Baukastensystem zum Herstellen und Abdichten einer Leitungsdurchführung (16) in einer Wand (17), umfassend:
- mehrere Hüllrohre (1), von denen jedes einen axialen Durchlasskanal (4) zum Durchführen einer einzelnen Leitung (18) bildet und durch ein Dichtelement (2) verschlossen ist, das eine durchstoßbare Dichtungsmembran (3) aufweist, die dazu ausgebildet ist, eine durch sie durchgestochene Leitung (18) von allen Seiten abdichtend zu umschließen; und
- mehrere miteinander verbindbare Montageplatten (6), die je eine oder mehrere Aussparungen (7) aufweisen, die zur Aufnahme und einer zumindest temporären Fixierung je eines der genannten Hüllrohre (1) mit einem der Aussparung (7) entsprechenden Außendurchmesser ausgebildet ist;
- wobei die mehreren Aussparungen (7) in der jeweiligen Montageplatte (6) in Bezug auf radiale Außenabmessungen der zugehörigen Hüllrohre (1) derart angeordnet und ausgebildet sind, dass zwischen den Hüllrohren (1), die an direkt benachbarten Aussparungen (7) fixiert sind, ein Zwischenraum zum Ausfüllen durch ein Wanderzeugungsmaterial verbleibt.

## Beschreibung

### GEBIET DER ERFINDUNG

Die Erfindung betrifft ein modulares Baukastensystem und ein zugehöriges Verfahren zum Herstellen und Abdichten einer Leitungsdurchführung, beispielsweise für Kabel oder Rohre, die durch eine Wand geführt werden sollen. Die Wand kann beispielsweise eine Seitenwand, Decke oder ein Boden eines Gebäudes sein. Insbesondere kann es sich dabei um eine brandschutzgerechte Abdichtung der Leitungsdurchführung, im Speziellen gegen Rauchgase und/oder gegen Wärmeübertragung, handeln.

### HINTERGRUND DER ERFINDUNG

Im Stand der Technik sind verschiedenartige Eingieß-Vorrichtungen und Brandschutz-Kabelboxen zur Abschottung, d. h. brandschutzgerechten Versiegelung, von Rohr- oder Kabeldurchführungen durch eine Gebäudewand bekannt. Sie umfassen in der Regel eine Durchführungshülse, die in einem herzustellenden Wandabschnitt oder einem Wanddurchbruch einbetoniert wird (Eingieß-Vorrichtungen) oder in anderer Weise installierbar ist, um ihn zu verschließen und dabei einen Durchlasskanal zur Durchführung von Leitungen wie Kabeln oder Rohren zu bilden. Der Durchlasskanal muss in der Regel in ausreichendem Maße gegen Rauch, Wärme, Gase und andere Medien, die sich in einem Brandfall im Gebäude bilden können, abgedichtet werden. Dadurch soll eine Ausbreitung des Brands und schädlicher Brandprodukte wie Rauch und Gase aus einem betroffenen Raum in andere Räume durch die Leitungsdurchführung weitgehend verhindert werden.

Im Bereich der Kabeldurchführungen werden dabei häufig sogenannte Sleeves (oder Einsteckhülsen) eingesetzt. Ganz einfache Sleeves bestehen aus einem Metallhüllrohr, das zum Bilden einer Aussparung im Sinne einer Durchgangsöffnung beim Betonieren der Wand dient, sowie einer Dichtmasse zum Abdichten der Leitungen, die durch diese Aussparung geführt werden. Leistungsfähigere Sleeve-Lösungen bestehen meist aus einem Metallrahmen mit Brandschutz und Dichtfunktion. Diese Sleeves werden in der Regel nach dem Fertigstellen der Rohbetonwand oder Rohbetondecke in eine darin vorgesehene Durchgangsöffnung eingeführt und beispielsweise mittels eines Montagerahmens nachträglich befestigt und abgedichtet.

Die oben genannten Systeme sind allerdings meist nicht vollständig rauchdicht, wenn sie zur Durchführung von Rohr- oder Kabelbündeln genutzt werden. Denn in aller Regel können dabei die Zwickel und Zwischenräume, die an und zwischen den Einzelleitungen eines Bündels entstehen, nicht vollständig dicht verschlossen werden. Zur Lösung dieses Problems sind insbesondere im Bereich der Gebäudeeinführung auch Sleeves mit einer im Querschnitt unterteilten Innenstruktur bekannt, um eine Vereinzelungslösung, d. h. eine Einzelkabelabdichtung zu erlauben. Diese Systeme sind auf Dichtigkeit optimiert, wobei die Vereinzelung in der Regel nur im Bereich der äußeren Abdichtungsebene stattfindet. Im Falle von Brandschutz-Zusatzanforderungen können dabei auch geeignete Zusatzmaßnahmen an sich bekannter Art für die Branddichtigkeit und die thermische Isolierung gewährleistet werden.

Bei diesen und anderen bekannten Systemen besteht das Problem meist darin, dass eine im Verhältnis zum Durchmesser einer einzelnen Leitung (wie eines Kabels oder Rohrs) relativ groß dimensionierte Hülse oder Sleeve oder Box verwendet wird. Diese Hülse/Sleeve/Box ist meist universell ausgelegt und auf die Durchführung von möglichst vielen Kabeln/Rohren ausgelegt, sie muss aber auch bei einer sogenannten Null-Belegung abdichtend funktionieren. Folglich sind darin verwendete Brandschutzmaßnahmen auf die maximale Bandbreite von Anwendungsbereichen ausgelegt und damit in den meisten Fällen überdimensioniert. So ist auch bei der oben erwähnten Vereinzelungslösung das einheitliche größte Sleeve zu verwenden, das etwa für einen Dutzend verschiedener Kabel mit variierenden Durchmessern ausgelegt ist, auch wenn nur einige wenige Kabel verlegt werden sollen.

Weitere Systeme zur brandschutzgerechten Herstellung und/oder Abdichtung von Leitungsdurchführungen sind beispielsweise aus US 2007283644, CN 201536237, US 2019120409, US 2016123002, US 2014020315, und DE 10331743 bekannt.

Es ist Aufgabe der vorliegenden Erfindung, ein System und ein entsprechendes Verfahren zur Herstellung und Abdichtung einer Leitungsdurchführung bereitzustellen, welche ein Optimum im Hinblick auf mindestens einige und idealerweise alle der folgenden Gesichtspunkte bieten können: einfaches Abdichten; gute Dichtigkeit; Wirtschaftlichkeit bei der Herstellung, beim Materialeinsatz und für den Anwender; flexible Anpassbarkeit an individuelle Bedürfnisse des Anwenders; sowie geringer Platzbedarf.

### ZUSAMMENFASSUNG DER ERFINDUNG

Diese Aufgabe wird durch ein modulares Baukastensystem gemäß Anspruch 1 zum Herstellen und Abdichten einer Leitungsdurchführung sowie durch ein zugehöriges Verfahren und eine dadurch hergestellte Leitungsdurchführung gemäß den nebengeordneten Ansprüchen gelöst. Weitere Ausgestaltungen sind in den abhängigen Ansprüchen angegeben. Alle hierin für das Baukastensystem beschriebenen Merkmale und Wirkungen gelten entsprechend auch für das Verfahren und die Leitungsdurchführung, wie auch umgekehrt.

Die Leitungsdurchführung kann insbesondere elektrische Kabel, aber auch Rohre oder andersartige Leitungen betreffen, die durch einen Brandabschnitt geführt werden sollen. Die Leitungsdurchführung kann insbesondere in einer herzustellenden (Beton-)Wand oder einem zu verschließenden Wanddurchbruch erzeugt werden. Die Wand kann beispielsweise eine Seitenwand, Decke oder ein Boden eines Gebäudes sein. Insbesondere kann es sich dabei um eine brandschutzgerechte Abdichtung der Leitungsdurchführung, im Speziellen gegen Rauchgase und/oder gegen Wärmeübertragung, handeln.

Gemäß einem ersten Aspekt ist ein modulares Baukastensystem zum Herstellen und Abdichten einer Leitungsdurchführung vorgesehen. Mit diesem Baukastensystem lassen sich die eingangs erwähnten Probleme und die oben genannten Aufgaben lösen. Insbesondere kann der Anwender damit die Leitungsdurchführung individuell an seine Bedürfnisse, etwa im Hinblick auf die Anzahl und die Durchmesser der durchzuführenden und abzudichtenden Leitungen, anpassen, bei gleichbleibend zuverlässiger Abdichtungsfunktion und Einfachheit der Herstellung und Abdichtung der Leitungsdurchführung.

Hierzu umfasst das modulare Baukastensystem die folgenden zwei Arten von Bauelementen, die idealerweise in unterschiedlichen Größen vorliegen:
Zum einen umfasst der Baukasten mehrere Hüllrohre, d. h. längliche zylindrische Hohlkörper, wobei jedes Hüllrohr in seiner Längsrichtung einen axialen Durchlasskanal zum Durchführen jeweils einer Einzelleitung bildet. Der Durchlasskanal ist in seinem Ausgangszustand vor Verlegung der Leitung an einer oder beiden Stirnseiten des Hüllrohrs durch ein Dichtelement verschlossen. Das Dichtelement weist eine durchstoßbare Dichtungsmembran auf, die dazu ausgebildet ist, von einer einzelnen Leitung (Kabel oder Rohr) bei deren Einführung in den Durchlasskanal durchgestochen zu werden und die durchgestochene Leitung von allen Seiten wieder abdichtend zu umschließen, ohne weiteres Zutun. Die Dichtungsmembran kann aus jedem zu dieser Funktionalität geeigneten, insbesondere elastisch dehnbaren Material, wie beispielsweise aus weichem PVC (Polyvinylchlorid), Gummi etc., mit einer abhängig von jeweiligen Durchmessern des Hüllrohrs und der durchzustechenden Leitung gewählten Dicke hergestellt sein. Die Hüllrohre können grundsätzlich beliebige Querschnittsformen aufweisen, insbesondere kreisrund, oval, oder vieleckig, insbesondere auch rechteckig. Die Hüllrohre können im Baukasten insbesondere mit mehreren verschiedenen Hüllrohrdurchmessern und/oder Querschnittsformen vorgesehen sein, um für Leitungen verschiedener Leitungsdurchmesser und/oder Querschnittsformen passend gewählt zu werden. Die richtige Wahl eines jeweils geeigneten Hüllrohrs, das die oben beschriebene Funktion gewährleistet, kann beispielsweise durch mitgelieferte Tabellen oder Beschriftungen auf den Hüllrohren, die geeignete Leitungsdurchmesser und/oder -Materialien angeben, sichergestellt werden, insbesondere auch für unerfahrene Anwender.

Zum anderen umfasst der Baukasten mehrere, insbesondere paarweise ähnliche oder identische und/oder Rand an Rand zu einer vergrößerten Fläche miteinander verbindbare Montageplatten (auch als Grundplatten bezeichnet). Dabei weist jede Montageplatte eine oder mehrere Aussparungen auf. Jede Aussparung ist zur Aufnahme und einer zumindest temporären Fixierung jeweils eines der Hüllrohre aus dem Baukastensystem mit einem der Aussparung entsprechenden Außendurchmesser und einer entsprechenden Querschnittsform ausgebildet. Die Aussparungen sind sinnvollerweise dazu ausgebildet, die Hüllrohre mit deren Achse im Wesentlichen senkrecht zu einer Montageplattenfläche bzw. Montageplattenebene zu positionieren und zu fixieren. Die Aussparungen können insbesondere als Durchgangslöcher, bei wiederverwendbaren Montageplatten, die nach Herstellung der Leitungsdurchführung abzunehmen sind, jedoch alternativ auch als Blindlöcher etc. ausgebildet sein.

Weist eine Montageplatte mehrere Aussparungen auf, so sind diese in Bezug auf radiale Außenabmessungen der zugehörigen Hüllrohre derart angeordnet und ausgebildet, dass zwischen den Hüllrohren, die an direkt benachbarten Aussparungen fixiert sind, ein radialer Abstand und damit ein Zwischenraum verbleibt, der insbesondere durch ein fließfähiges Wanderzeugungsmaterial (wie Beton etc.) bei der Wandherstellung oder Schließung eines Wanddurchbruchs ausfüllbar ist.

Insbesondere kann das Baukastensystem mehrere Montageplatten umfassen, die zu einer flächenmäßig zusammengesetzten Montageplatte jeweils Rand an Rand aneinander befestigbar sind und von Montageplatte zu Montageplatte gleich oder unterschiedlich ausgebildete Aussparungen in jeweils gleicher oder unterschiedlicher Anzahl und/oder Anordnung aufweisen. Auch hier sind die Aussparungen in den einzelnen Montageplatten in Bezug auf die radialen Außenabmessungen der zugehörigen Hüllrohre derart angeordnet und ausgebildet, dass zwischen den Hüllrohren, die an direkt benachbarten Aussparungen von je zwei miteinander verbundenen Montageplatten fixiert sind, ein radialer Abstand und damit ein Zwischenraum zum Ausfüllen durch ein fließfähiges Wanderzeugungsmaterial (wie Beton etc.) verbleibt. Dies kann beispielsweise zur Gewährleistung einer ausreichenden Kühlung und/oder einer außenseitigen Abdichtung der Hüllrohre beitragen.

Hauptfunktion der Montageplatten ist die Positionierung der Hüllrohre vor und bei dem Herstellen der Wand bzw. beim Verschließen eines Wanddurchbruchs, in der bzw. dem die Leitungsdurchführung erzeugt werden soll. Hierzu kann die Montageplatte mit daran fixierten Hüllrohren beispielsweise an einer Schalung befestigt werden, die zum Eingießen und Aushärten eines fließfähigen Wanderzeugungsmaterials (insbesondere Betons) für den jeweiligen Wandabschnitt verwendet wird. Nach dem Aushärten der Wand können die Montageplatten, beispielsweise zusammen mit der Schalung, von dem fertigen Wandabschnitt entfernt und wiederverwendet werden. Dies ist jedoch nicht zwingend. Möglich ist es also auch, dass die Montageplatten dauerhaft in der Wand oder Betondecke verbleibt. In diesem Falle können die Montageplatten möglichst einfach und mit möglichst wenig Materialeinsatz, beispielsweise aus einem Recyclingmaterial, gefertigt werden. Im Übrigen können die Montageplatten beispielsweise aus Kunststoff oder Metall oder jedem anderen für die hierin beschriebene Funktionalität geeigneten Werkstoff gefertigt sein.

Eine Idee des vorliegenden Baukastensystems liegt neben seiner flexiblen Anpassbarkeit an individuelle Größen- und Mengenbedürfnisse des Anwenders durch die Modularität ferner auch in dem Vereinzelungsprinzips und in dem besonders leistungsfähigen konstruktiven Konzept seiner Realisierung. Zum einen ist für jede zu verlegende Leitung ein eigenes Hüllrohr mit mindestens einer von dieser Leitung durchzustechenden Dichtungsmembran vorgesehen, die die Einzelleitung daher lückenfrei von allen Seiten abzudichten vermag. Zum anderen ist jedes Hüllrohr nach erfolgtem Eingießen der Konstruktion (aus insgesamt benötigten Hüllrohren an den diese fixierenden Montageplatten) in Beton (oder einem anderen Wanderzeugungsmaterial) von diesem umgeben. Dadurch kann jede Leitung über ihr eigenes, passend dimensioniertes Hüllrohr, beispielsweise im Brandfall oder bei einer sonstigen Wärmeübertragung deutlich besser gekühlt werden als beispielsweise ein ganzes Kabelbündel in einem einzigen Sleeve, bei dem für einzelne Kabel des Bündels deutlich weniger Kontakt zum umgebenden kühlen Beton (oder einem anderen Wanderzeugungsmaterial) realisierbar ist. Weitere Ausgestaltungsmöglichkeiten, damit verbundene Wirkungen und Vorteile des vorgeschlagenen Baukastensystems werden hierin weiter unten angegeben.

In der Praxis hat der Anwender typischerweise bereits vor der Errichtung einzelner Wände im Gebäude einen Elektroplan darüber, welche Kabel und andere Leitungen durch welche Wände geführt werden sollen oder können. Basierend auf diesem Plan kann der Anwender des Baukastensystems, beispielsweise ein Elektriker, bei Installationsarbeiten vor der Wanderrichtung die Kabeltrassen und Leitertrassen entsprechend vorbereiten, indem er die passenden leeren Hüllrohre aus dem Baukastensystem auswählt und unter Verwendung der hierzu passenden Montageplatten wie hierin beschreiben positioniert und in dem benötigten Wandabschnitt durch Eingießen bzw. Einbetonieren verlegt. Dabei kann der Anwender die Ausgestaltung der Leitungsdurchführung im Hinblick auf die Anzahl, Größe und gegenseitige Anordnung einzelner Durchlasskanäle/Hüllrohre für einzelne Leitungen mittels des Baukastens individuell gestalten und an seine spezifischen Wünsche und Anforderungen flexibel anpassen.

Gemäß einer Ausführungsform weisen zumindest einige der Montageplatten des Baukastensystems zur Befestigung aneinander jeweils mindestens ein Verbindungselement auf. Damit können die zusammengesetzten Montageplatten in einer geeigneten Anordnung nebeneinander fixiert werden, insbesondere um vorbestimmte geeignete Abstände für die daran befestigten Hüllrohre zu gewährleisten und/oder eine stabile und/oder kompakte Baugruppe zu erhalten.

Insbesondere kann dabei jede dieser Montageplatten (und idealerweise jede Montageplatte des Baukastensystems) mindestens zwei komplementär zueinander ausgebildete Verbindungselemente aufweisen, die in jeder Montageplatte in gleicher Weise ausgebildet und angeordnet sind, sodass Verbindungselemente zweier Montageplatten zu deren Befestigung aneinander zu einem Formschluss durch Ineinandergreifen zu bringen sind. Auf diese Weise lässt sich beispielsweise in besonders einfacher Weise eine Modularität des Baukastens erreichen, bei der beispielsweise alle Montageplatten in beliebigen Kombinationen miteinander zu einer zusammengesetzten Montageplatte mit einer vergrößerten Fläche und Anzahl von Ausnehmungen verbindbar sind. Diese Art der Verbindungselemente kann zudem besonders einfach im Hinblick auf die Herstellung des Baukastens und/oder die Handhabung bei der Montage sein.

Wie bereits erwähnt, können zumindest einige der Aussparungen als Durchgangsöffnungen in den Montageplatten ausgebildet sein. Bei dieser Ausgestaltung können die zugehörigen Hüllrohre zu ihrer Fixierung an der Montageplatte zumindest teilweise in die jeweilige Aussparung einsetzbar sein. Insbesondere kann dadurch der Durchlasskanal des jeweiligen Hüllrohrs dabei von der Montageplatte unverdeckt bleiben, sodass die Montageplatte beispielsweise auch nach der Fertigstellung des Wandabschnitts mit der Leitungsdurchführung in der Wand verbleiben kann (Einweg-Montageplatte).

Gemäß einer Ausführungsform weisen zumindest einige der Hüllrohre außenseitig zumindest an einem ihrer beiden Enden eine umlaufende Schulter auf, die beispielsweise durch eine sich von der Stirnseite des Hüllrohrs bis zur Schulter erstreckende Vertiefung oder durch einen radialen Vorsprung gebildet sein kann. Die Schulter ist in einem vorbestimmten axialen Schulterabstand von der Stirnseite des Hüllrohrs angeordnet, und die zugehörigen Aussparungen der Montageplatten besitzen einen Innendurchmesser, der im Wesentlichen passgenau einem Außendurchmesser eines solchen zugehörigen Hüllrohrs in seinem axialen Endabschnitt jenseits der Schulter entspricht. Mit anderen Worten ist das Hüllrohr bei dieser Ausführungsform bis zum Anschlag an seiner Schulter in die Aussparung einsetzbar, wodurch neben einer erheblichen Vereinfachung des Montagevorgangs auch die Robustheit und/oder die Präzision der Positionierung der Hüllrohre an den Montageplatten erhöht werden kann.

Gemäß einer Ausführungsform können zumindest einige der Hüllrohre innen- und/oder außenseitig mindestens ein Intumeszenzelement aufweisen, das zur Einhaltung vorbestimmter Brandschutzmaßnahmen ausgelegt sein kann. Das Intumeszenzelement kann hierzu beispielsweise als ein umlaufender Streifen aus oder mit einem intumeszierenden, d. h. unter Hitzeeinwirkung aufschäumenden und den Durchlasskanal innen- bzw. außenseitig zusätzlich verschließenden, Material ausgebildet sein. Dabei kann das außenseitige Intumeszenzelement insbesondere in einem vorbestimmten axialen Hinterschnitts-Abstand von der jeweiligen Stirnseite oder gegebenenfalls von der oben genannten Schulter des Hüllrohrs angeordnet sein, um einen Hinterschnitt im später eingefüllten Wanderzeugungsmaterial (Beton etc.) zu bilden.

Gemäß einer Ausführungsform kann zumindest bei einigen der Hüllrohre die jeweilige Dichtungsmembran in ihrem nicht durchgestochenen Zustand mit einem vorbestimmten axialen Membran-Versatz von der zugehörigen Stirnseite im Hüllrohr entfernt angeordnet sein. Durch eine derart vertiefte Membrananordnung im Hüllrohr kann beispielsweise eine unbeabsichtigte Membranbeschädigung, etwa beim Abstreifen einer flüssigen Betonschicht (oder anderes Wanderzeugungsmaterials) mit einem Flügelglätter oder einer Rakel bei der Wandherstellung, zuverlässig vermieden werden.

Insbesondere kann mindestens eine der Montageplatten ein oder mehrere Befestigungselemente zu einer zumindest temporären Befestigung der Montageplatte an einer Wanderzeugungsschalung aufweisen. Auch hierdurch kann der weiter unten ausführlicher beschriebene Vorgang der Herstellung der Wand und der darin ausgebildeten Leitungsdurchführung vereinfacht und/oder die Robustheit der Baugruppe erhöht werden. Insbesondere kann ein solches Befestigungselement als ein Durchgangsloch zur Aufnahme eines Verbindungskörpers wie eines Nagels, einer Schraube oder eines Bolzens ausgebildet sein.

Gemäß einer Ausführungsform können zumindest einige der Hüllrohre zumindest an einem ihrer beiden Enden ein sich axial über die Stirnfläche des Hüllrohrs hinaus um eine vorbestimmte Länge erstreckendes Auffindungselement, insbesondere in Form bürstenartig am Hüllrohr befestigter Auffindungshaare, aufweisen. Alternativ oder zusätzlich kann auch mindestens eine der Montageplatten in einem Randbereich ihrer Fläche mindestens ein aus der Montageplattenfläche um eine vorbestimmte Länge emporragendes Auffindungselement, insbesondere in Form bürstenartig an der Montageplatte befestigter Auffindungshaare, aufweisen. Durch solche Auffindungselemente kann das Auffinden der Leitungsdurchführung nach dem Eingießen der Baugruppe in einer Wand erleichtert werden.

Gemäß einer Ausführungsform sind die Hüllrohre einerseits und die zugehörigen Aussparungen der Montageplatten andererseits derart ausgebildet, dass das jeweilige Hüllrohr in seinem an der Montageplatte fixierten Zustand axial nicht über eine vom Hüllrohr abgewandte Montageplattenoberfläche hinausragt. Insbesondere kann diese Montageplattenoberfläche sogar um einen vorbestimmten axialen Schutz-Versatz über der Stirnseite des daran fixierten Hüllrohrs überstehen. Durch eine derart vertiefte Anordnung der Hüllrohre in den Montageplatten kann beispielsweise eine unbeabsichtigte Hüllrohr- oder Membranbeschädigung, etwa beim Abstreifen einer flüssigen Betonschicht (oder anderes Wanderzeugungsmaterials) mit einem Flügelglätter oder einer Rakel bei der Wandherstellung, zuverlässig vermieden werden.

Insbesondere kann das Baukastensystem zum Herstellen und Abdichten einer Leitungsdurchführung gegen Rauch und/oder Feuer und/oder andere Medien wie Wärme und Wasser ausgelegt sein, die sonst beispielsweise im Brandfall oder anderen Unfallsituationen über die Leitungsdurchführung von Raum zu Raum gelangen könnten. Dies lässt sich durch einzelne Merkmale des Baukastensystems, die hierin beschrieben sind, in Kombination mit einer geeigneten Materialwahl und/oder mit weiteren Schutzmaßnahmen und Elementen zum Brandschutz erreichen.

Gemäß einem weiteren Aspekt ist ein Verfahren zum Herstellen und Abdichten einer Leitungsdurchführung unter Verwendung eines hierin vorgestellten Baukastensystems vorgesehen. Das Verfahren kann beispielsweise folgende Schritte umfassen:
- Auswählen eines oder mehrerer der genannten Hüllrohre in der Anzahl der zu verlegenden Leitungen und mit von den jeweiligen Leitungsdurchmessern abhängigen Hüllrohrdurchmessern aus dem Baukastensystem;
- Auswählen einer oder mehrerer Montageplatten, deren Aussparungen für die ausgewählten Hüllrohre ausgelegt sind, aus dem Baukastensystem;
- gegebenenfalls Verbinden der ausgewählten Montageplatten miteinander zu einer (oder zwei identischen) zusammengesetzten Montageplatte(n) mit einer kumulativ aus den miteinander verbundenen Montageplatten zusammengesetzten Montageplattenfläche;
- Befestigen der ausgewählten Montageplatten an einer Wanderzeugungsstruktur, insbesondere einer Schalung, die zur Erzeugung einer Wand (im allgemeinsten Sinne, d. h. die Wand kann insbesondere eine Seitenwand, eine Decke oder einen Boden eines Gebäuderaums darstellen) mit der herzustellenden Leitungsdurchführung vorgesehen ist;
- Einführen der ausgewählten Hüllrohre mit deren hierzu vorgesehenen Enden in die hierfür vorgesehenen Aussparungen der ausgewählten Montageplatten;
- Eingießen eines fließfähigen und aushärtbaren oder verfestigbaren Wanderzeugungsmaterials, insbesondere Betons, in die Wanderzeugungsstruktur und damit um die Hüllrohre herum und in die zwischen den Hüllrohren vorhandenen Zwischenräume, und Aushärten bzw. Verfestigen des Wanderzeugungsmaterials, wodurch eine Wand mit darin eingegossenen Leitungsdurchführungen in Form der einzelnen Hüllrohre entsteht; und
- Einführen je einer einzigen zu verlegenden Leitung in ein hierfür vorgesehenes Hüllrohr, wobei die mindestens eine Dichtungsmembran des Hüllrohrs von der Leitung durchgestochen wird, sodass die Leitung danach ohne weiteres Zutun von allen Seiten von der durchgestochenen Dichtungsmembran abdichtend umschlossen ist.

Insbesondere können zu der Montage paarweise identische Montageplatten ausgewählt werden und die Hüllrohre an deren beiden Enden an den zugehörigen Aussparungen der paarweise identischen Montageplatten befestigt werden, bevor das Wanderzeugungsmaterial in die Wanderzeugungsstruktur eingegossen wird. Dadurch lässt sich insbesondere eine besonders stabile Baugruppe aus je zwei identischen Montageplattenanordnungen und dazwischen fixierten Hüllrohren erzeugen.

Bei einer spezifischen Verfahrensvariante werden die Montageplatten nach der Erzeugung der Wand und der darin eingegossenen Leitungsdurchführung von mindestens einem der beiden Enden der in der Wand eingegossenen Hüllrohre entfernt. Wie bereits erwähnt, ist dies jedoch nicht zwingend, d. h. die Montageplatten können nach der Fertigstellung der Wand auch darin verbleiben und die Hüllrohre dadurch zusätzlich zum Beton etc. weiter stabilisieren.

Gemäß einem weiteren Aspekt ist eine Leitungsdurchführung in einer Wand vorgesehen, die durch ein hierin vorgestelltes Verfahren hergestellt wurde. Weist die Leitungsdurchführung mehrere Hüllrohre auf, so sind die einzelnen Hüllrohre jeweils vollständig durch Zwischenräume voneinander getrennt, die vom verfestigten Wanderzeugungsmaterial wie Beton etc. und/oder gegebenenfalls andersartigem Füllungs- oder Brandschutzmaterial ausgefüllt sind.

Die Leistungsfähigkeit des hierin vorgestellten modularen Baukastensystems und des entsprechenden Verfahrens zur Herstellung und Abdichtung von Kabeldurchführungen wurde durch Tests untersucht und mit einer herkömmlichen Brandschutz-Kabelbox eingangs erwähnter Art verglichen, in die bei ihrer bestimmungsgemäßen Verwendung insgesamt etwa 20-30 Kabel mit Kabeldurchmessern von etwa 10-20 mm passen. Die Vergleichstests haben ergeben, dass bei einer Leitungsdurchführung auf Basis des Einzelkabelprinzips unter Verwendung des hierin vorgestellten Baukastensystems deutlich weniger intumeszierendes Material zum Erzielen der gleichen Leistung im Hinblick auf die Brandschutzanforderungen gebraucht wird:
Während für die herkömmliche Brandschutz-Kabelbox etwa 100 g intumeszierendes Material benötigt wird, werden bei der Leitungsdurchführung gemäß der vorliegenden Erfindung für ein Einzelkabel mit einem Außendurchmesser von beispielsweise 10 mm nur etwa 2 g intumeszierendes Material zum brandsicheren Abdichten benötigt. Während also bei der herkömmlichen Brandschutz-Kabelbox für 30 Kabel etwa 100 g verbraucht werden, wird bei der vorliegenden Lösung für die gleiche Kabelanzahl hingegen nur 30 x 2 g = 60 g Intumeszenzmaterial gebraucht. Dadurch können bei gleicher Feuerwiderstandsdauer somit etwa 40% Intumeszenzmaterial eingespart werden. Zudem konnte bei den Vergleichstests eine bessere Dichtigkeit der erfindungsgemäßer Kabeldurchführung im Vergleich zu jeder verfügbaren Kabeldurchführung in Gruppenanordnung festgestellt werden.

Diese Vorteile beruhen hauptsächlich auf dem Vereinzelungsprinzip, welches dem vorgestellten Durchführungs-Konzept auf Basis des modularen Baukastensystems zugrunde liegt. Jedes Hüllrohr ist nach erfolgtem Eingießen in Beton von diesem umgeben. Dadurch kann das Hüllrohr (als eine Art Einzel-Durchführungshülse) durch das umgebende kühle Beton besser gekühlt werden als ein Kabelbündel in einer Brandschutz-Kabelboxnach Stand der Technik, die nur wenig Kontakt zum umgebenden kühlen Beton hat. Ein weiterer wichtiger Vorteil, der sich aus dem hierin vorgestellten Konzept ergibt, liegt darin, dass beispielsweise bei Deckendurchführungen eine Dichtigkeit von nahezu 100% erreichbar ist. Ein von herkömmlichen Anordnungen bekannter Kamineffekt mit einem kontinuierlichen Wärmetransport durch die Kabeldurchführung kann demzufolge mit dem hierin vorgestellten Baukastensystem und seinem Abdichtungskonzept unterbunden werden.

Dabei bleibt das Kabel in jedem Hüllrohr bei gleichen Testbedingungen selbst länger kühl, und die Dichtelemente an den Oberseiten bzw. Enden jedes Hüllrohres sind auch weniger hohen Temperaturen ausgesetzt. Bei der Auswahl der Werkstoffe für die Dichtelemente, und damit für die jeweilige Dichtungsmembran, ist deshalb eine gute Temperaturbeständigkeit deutlich weniger kritisch als bei herkömmlichen Systemen.

Dies ermöglicht wiederum weitere, bessere Produktionsmöglichkeiten, wie beispielsweise einen Zweikomponenten-Spritzguß (2K-Spritzguß) für die Hüllrohre. Es können also bei der Herstellung der Hüllrohre des Baukastensystems unterschiedliche Materialien für die Hüllrohre als solche und für deren Dichtelemente verwendet werden, die in einem Fertigungsschritt zusammenzubringen sind:
- Harter, robuster, schlagzäher Kunststoff für das Hüllrohr, um eine robuste Leitungsdurchführung zu erreichen, die mechanischen Belastungen widerstehen kann; und
- Weicher, elastisch dehnbarer Kunststoff für die Dichtelemente, und damit für die Dichtungsmembranen, um eine möglichst gute Dichtungsfunktion zu erreichen.

Andererseits können mit dem hierin vorgestellten Baukastenkonzept auf Basis des Vereinzelungsprinzips auch bessere Zulassungen im Hinblick auf den Brandschutz erreicht werden:
- Eine größere Feuerwiderstandsdauer, wie z. B. EI 180 im Vergleich zu der mit herkömmlichen Systemen erreichbaren Feuerwiderstandsdauer EI 90; oder
- Bei normaler Feuerwiderstandsdauer von z. B. EI 90 ist deutlich weniger Intumeszensmaterial notwendig; oder
Es sind auch geringere Wand- oder Deckenstärken bei gleicher Feuerwiderstandsdauer möglich.

Folgende positive Eigenschaften und Wirkungen können mit dem hierin vorgestellten Konzept insbesondere gewährleistet werden:
- Eine Eingieß-Lösung bzw. Eingieß-Vorrichtung; Brandschutz ist zuerst montiert, kein Risiko einer Fehlanwendung durch zu geringen Abstand der Leitungen, kein Risiko einer Fehlanwendung durch Verwendung von zu wenig Brandschutzmaterial, einfache Inspektion;
- Individuell an jede Wand- oder Deckendurchführung und Leitungsanzahl anpassbar;
   - im Voraus planbar (BIM);
   - Sehr gute Rauchgasdichtigkeit durch Einzelleitungsführung;
   - Längere Feuerwiderstandsdauer;
   - geringerer Materialeinsatz für das Intumeszensmaterial;
   - geringere Schottstärke.

### KURZE BESCHREIBUNG DER FIGUREN

Die obigen Aspekte, Ausführungsformen und spezifische Ausgestaltungen der Erfindung werden nachfolgend anhand der in den Zeichnungen dargestellten Ausführungsbeispiele näher erläutert. Die Zeichnungen sind schematisch. Sie können, müssen jedoch nicht als maßstabsgetreu zu verstehen sein. Es zeigen:
- Figur 1: in einem Längsschnitt ein Hüllrohr als Bestandteil eines modularen Baukastensystems gemäß einer Ausführungsform der Erfindung;
- Figur 2: in einer Draufsicht eine Montageplatte als Bestandteil eines modularen Baukastensystems gemäß einer Ausführungsform der Erfindung;
- Figur 3: in einer perspektivischen Ansicht weitere Hüllrohre des Baukastensystems nach einer Ausführungsform der Erfindung;
- Figur 4: eine Draufsicht von zwei aneinander befestigten identischen Montageplatten des Baukastensystems nach einer Ausführungsform der Erfindung;
- Figur 5: eine Draufsicht von fünf aneinander befestigten teils unterschiedlichen Montageplatten des Baukastensystems nach einer Ausführungsform der Erfindung;
- Figur 6: in einem Längsschnitt ein weiteres Beispiel eines Hüllrohrs des Baukastensystems nach einer Ausführungsform der Erfindung;
- Figur 7: in einem Längsschnitt ein weiteres Beispiel eines Hüllrohrs des Baukastensystems nach einer Ausführungsform der Erfindung;
- Figur 8: in einer perspektivischen Darstellung eine Baugruppe, die bei einer Ausführungsform des Verfahrens gemäß der Erfindung vor dem Eingießen des Betons in die Schalung vorliegen kann;
- Figur 9: in einem Längsschnitt ein Beispiel einer einbetonierten Leitungsdurchführung in einer Wand gemäß einer Ausführungsform der Erfindung, vor dem Einführen von Leitungen;
- Figur 10: in einem Längsschnitt die Leitungsdurchführung der Fig. 9 nach dem Einführen von je einer Leitung in zwei von drei Durchlasskanäle;

### AUSFÜHRLICHE BESCHREIBUNG DER ERFINDUNG

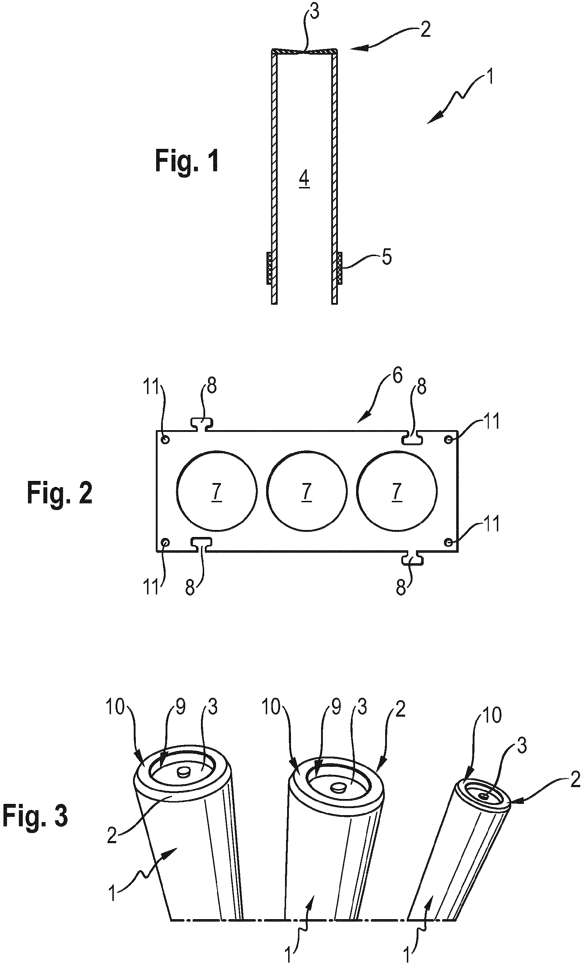

Alle weiter oben in der Beschreibung und in den nachfolgenden Ansprüchen erwähnten verschiedenen Ausführungsformen, Varianten und spezifischen Ausgestaltungsmerkmale des modularen Baukastensystems, des zugehörigen Verfahrens und der damit hergestellten Leitungsdurchführung gemäß den obigen Aspekten der Erfindung können bei den in den Figuren 1 bis 10 gezeigten Beispielen implementiert sein. Sie werden daher nachfolgend nicht alle nochmals wiederholt. Das Gleiche gilt entsprechend für die weiter oben bereits angegebenen Begriffsdefinitionen und Wirkungen in Bezug auf einzelne Merkmale, die in den Fig. 1-10 gezeigt sind.

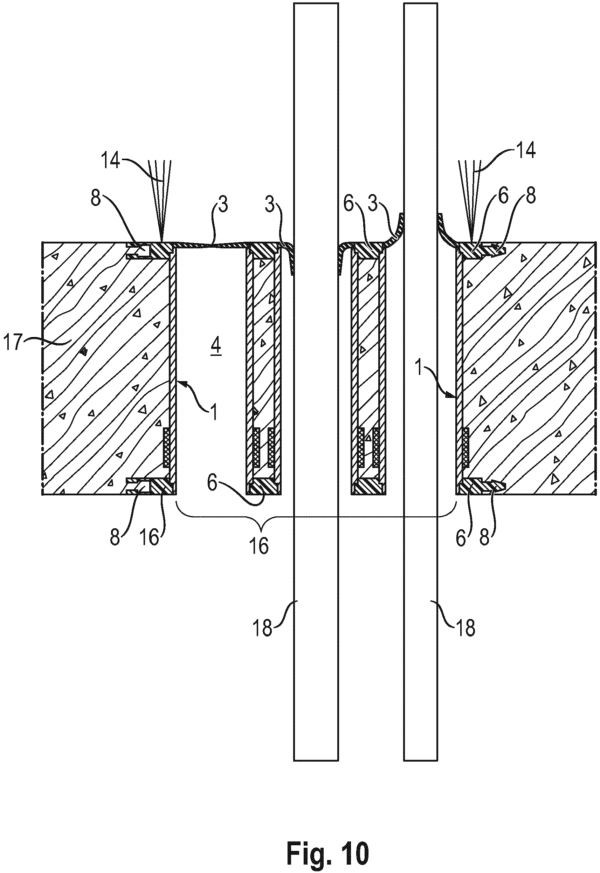

Fig. 1 zeigt in einem Längsschnitt ein Beispiel eines einzelnen Hüllrohrs 1 als Bestandteil eines modularen Baukastensystems (auch kurz Baukasten genannt) gemäß dem ersten Aspekt der Erfindung. Der Baukasten kann mehrere solche und anders ausgebildete Hüllrohre 1 mit verschiedenen Durchmessergrößen umfassen (vgl. Fig. 3). Das Hüllrohr 1 besitzt in diesem Beispiel an einem seiner beiden Enden ein Dichtelement 2 mit einer von einer Leitung (nur in Fig. 10 gezeigt) zu durchstoßenden Dichtungsmembran 3 beispielsweise aus Weich-PVC, Gummi etc. Die Dichtungsmembran 3 verschließt den vom Hüllrohr 1 gebildeten Durchlasskanal 4 und dichtet ihn dadurch ab. Ferner ist in diesem Beispiel an einem anderen Ende des Hüllrohrs 1 außenseitig ein Intumeszenzelement 5 in Form eines umlaufenden intumeszierenden Brandschutzbands vorgesehen.

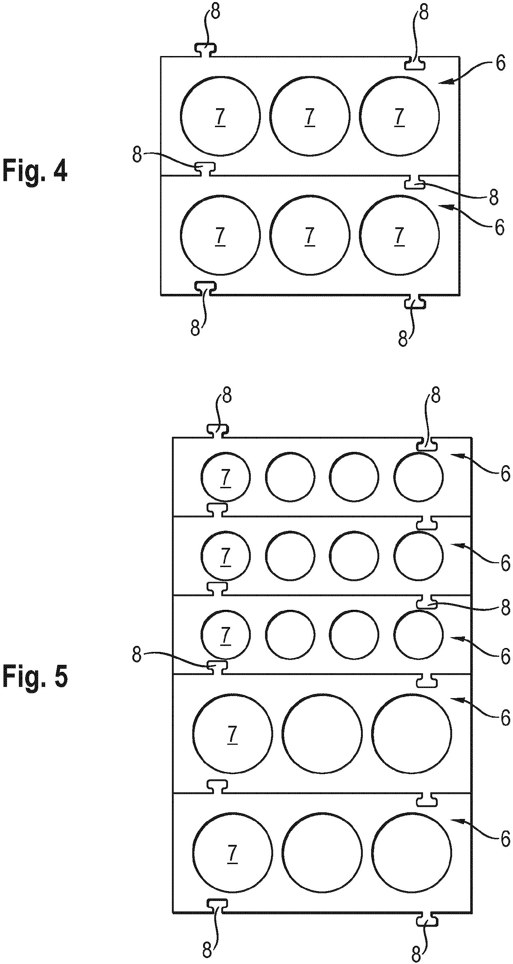

Fig. 2 zeigt in einer Draufsicht ein Beispiel einer rechteckigen Montageplatte 6 aus Kunststoff oder Metall etc., die ebenfalls Bestandteil eines modularen Baukastensystems gemäß dem ersten Aspekt der Erfindung ist. In diesem Beispiel besitzt die Montageplatte 6 drei gleiche kreisförmige Aussparungen 7, die jeweils zur Aufnahme und einer zumindest temporären Fixierung je eines Hüllrohrs 1, beispielsweise aus Fig. 1, mit einem der Aussparung 7 entsprechenden Querschnitt und Außendurchmesser ausgebildet sind. Der Baukasten kann mehrere gleich und/oder anders ausgebildete Montageplatten 6 mit Aussparungen 7 in jeweils gleicher oder unterschiedlicher Anzahl, Größe und/oder Anordnung umfassen, die insbesondere miteinander zu modular zusammengesetzten Montageplatten verbindbar sein können (vgl. Fig. 4-5).

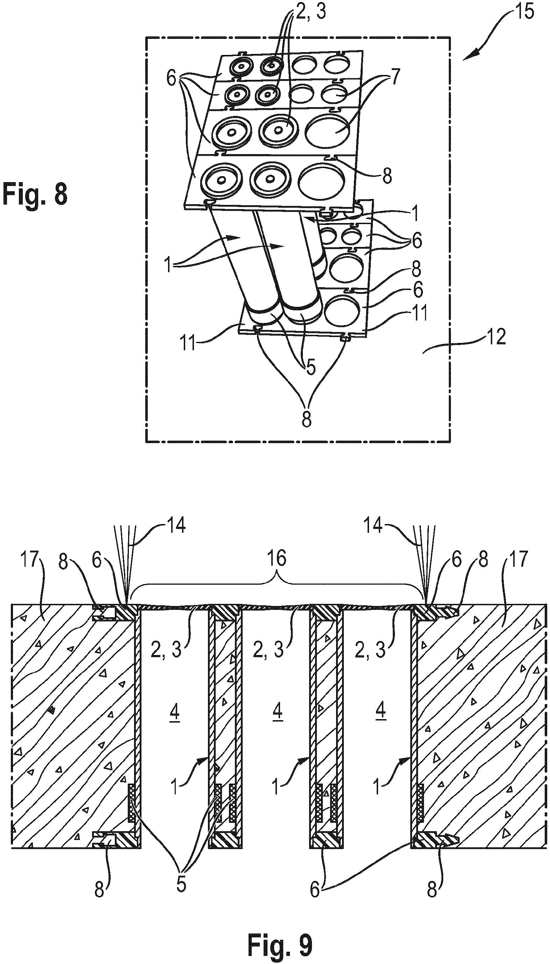

In diesem Beispiel besitzt die Montageplatte 6 an ihren beiden langen Kanten je zwei komplementär zueinander ausgebildete Verbindungselemente 8, die auch in jeder anderen Montageplatte 6 des Baukastens in gleicher Weise ausgebildet und angeordnet sind (vgl. Fig. 4 und 5), sodass Verbindungselemente 8 zweier Montageplatten 6 zu deren Befestigung aneinander zu einem Formschluss durch Ineinandergreifen zu bringen sind, wie in Fig. 4 und 5 gezeigt. Ferner besitzt die Montageplatte 6 in jeder ihrer Ecken ein optionales Befestigungselement 11 zu einer zumindest temporären Befestigung an einer Wanderzeugungsschalung, beispielsweise einer Betonschalung 12 der Fig. 8. Hier ist jedes Befestigungselement 11 als ein Durchgangsloch zur Aufnahme eines Verbindungskörpers wie eines Nagels, einer Schraube oder eines Bolzens zur Befestigung der Montageplatte 6 auf der Betonschalung 12 ausgebildet (vgl. Fig. 8).

Fig. 3 zeigt in einer perspektivischen Ansicht rein beispielhaft drei oder mehr Hüllrohre 1 des Baukastens nach einer Ausführungsform der Erfindung mit teils gleichen und teils verschiedenen Durchmessern. Bei den zwei gleich ausgebildeten dickeren Hüllrohren 1 ist die Dichtungsmembran 3 in ihrem nicht durchgestochenen Zustand jeweils mit einem vorbestimmten axialen Membran-Versatz 9 von der zugehörigen Stirnseite 10 im Hüllrohr 1 entfernt angeordnet.

Der Zweck des axialen Membran-Versatzes 9 wird weiter unten mit Bezug auf Fig. 8 erläutert.

Fig. 4 zeigt eine Draufsicht einer Zweieranordnung von zwei identischen rechteckigen Montageplatten 6 ähnlich der Fig. 2, die Rand an Rand durch paarweise komplementär ausgebildete Verbindungselemente 8 per Formschluss aneinander befestigt wurden.

Fig. 5 zeigt, ebenfalls in einer Draufsicht, ein weiteres Beispiel von insgesamt fünf auf diese Weise miteinander verbundenen rechteckigen Montageplatten 6 nach einer Ausführungsform der Erfindung mit teils gleichen und teils unterschiedlichen Baugrößen und Anordnungen der Aussparungen 7. Im Übrigen gilt hier das Gleiche wie in Bezug auf Fig. 4 beschrieben.

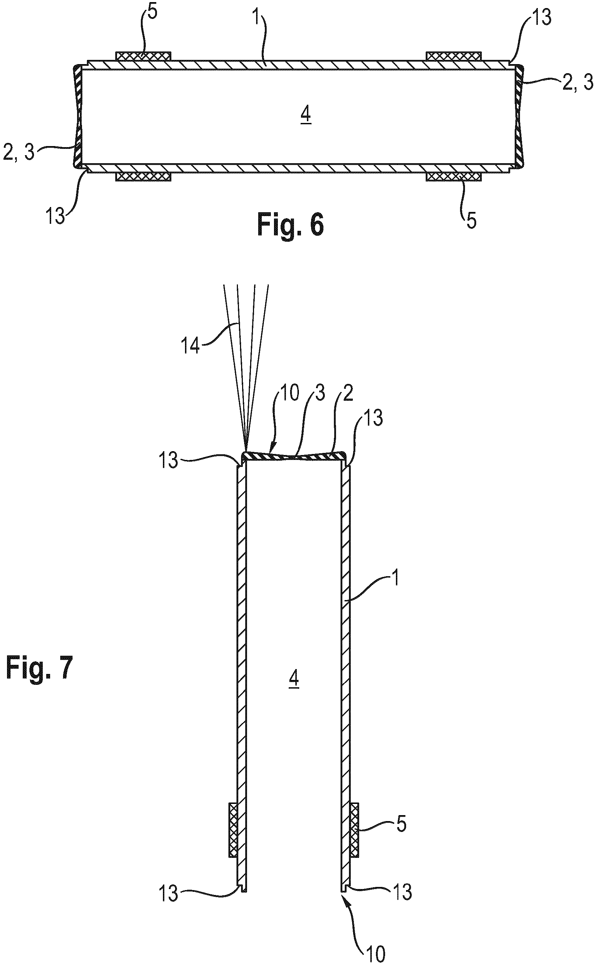

Fig. 6 zeigt in einem Längsschnitt ein weiteres Beispiel eines Hüllrohrs 1 des Baukastens nach einer Ausführungsform der Erfindung, das beispielsweise für eine Leitungsdurchführung in einer Seitenwand eines Gebäudes zum Einsatz kommen kann. Es unterscheidet sich vom Hüllrohr 1 der Fig. 1 nur dadurch, dass es an beiden seinen Enden ein außenseitiges Intumeszenzelement 5 in Form eines umlaufenden intumeszierenden Brandschutzbands (auch Intumeszenzstreifen genannt) und ein Dichtelement 2 mit einer Dichtungsmembran 3 aufweist, die den Durchlasskanal abdichtet, sowie durch umlaufende Schultern 13, die nachfolgend mit Bezug auf Fig. 7 beschrieben werden.

Fig. 7 zeigt in einem Längsschnitt ein weiteres Beispiel eines Hüllrohrs 1 des Baukastens nach einer Ausführungsform der Erfindung. Es unterscheidet sich vom Hüllrohr 1 der Fig. 1 zum einen dadurch, dass es an beiden seinen Enden zur verbesserten Anbindung an die Montageplatten 6 des Baukastens eine umlaufende Schulter 13 aufweist. Die Schulter 13 ist in diesem Beispiel durch eine sich von der jeweiligen Stirnseite 10 des Hüllrohrs 1 bis zur Schulter 13 erstreckende Vertiefung gebildet und dient zur Tiefenbegrenzung bei der Montage des Hüllrohrs 1 an einer Montageplatte 6. Das Intumeszenselement 5 ist dabei so angeordnet (hier in einem vorbestimmten axialen Hinterschnitts-Abstand von der Stirnseite 10 und von der Schulter 13), dass beim Einbetonieren ein Hinterschnitt im Beton erzeugt werden kann.

Ferner besitzt das Hüllrohr 1 in Fig. 7 ein sich axial über die Stirnfläche bzw. Stirnseite 10 des Hüllrohrs 1 hinaus um eine vorbestimmte Länge erstreckendes Auffindungselement 14, hier in Form von am Hüllrohr 1 angespritzten bürstenartigen Haaren (englisch: whiskers). Diese dienen dem Auffinden der Leitungsdurchführung, sollte beim Eingießen der Wand die Durchführung nicht mehr ohne Weiteres von außen auffindbar sein. Alternativ oder zusätzlich könnten solche Auffindungselemente 14 (Bürstenelemente) auch an der Montageplatte 6 angebracht sein, wie in Fig. 9 und 10 gezeigt.

Fig. 8 zeigt in einer perspektivischen Darstellung eine Baugruppe 15 (auch Modul genannt), die bei einem hierin weiter oben und in den Ansprüchen beschriebenen Verfahren gemäß der Erfindung kurz vor dem Eingießen des Wanderzeugungsmaterials (hier Betons) in die Betonschalung 12 vorliegen kann. Die Baugruppe umfasst zwei identische, jeweils aus vier einzelnen Montageplatten 6 mit je drei bzw. vier Aussparungen 7 unterschiedlicher Größe durch Verbindung Rand an Rand zusammengesetzte Montageplatten ähnlich der Fig. 5, zwischen denen in diesem Beispiel acht Hüllrohre 1 in den Aussparungen 7 jeweils entsprechender unterschiedlicher Größe positioniert und fixiert sind. In Fig. 8 ist die untere der beiden zusammengesetzten Montageplatten mittels der Befestigungselemente 11 (Durchgangslöcher mit Nägeln) an der Schalung 12 für die Zeit der Betonierung vorläufig befestigt. Wie man an diesem Beispiel sieht, müssen nicht zwingend alle Aussparungen 7 der Baugruppe 15 mit Hüllrohren 1 belegt sein.

Fig. 9 zeigt in einem Längsschnitt ein Beispiel einer einbetonierten Leitungsdurchführung 16 in einer Wand 17 (hier eine Decke), die durch ein Verfahren gemäß dem zweiten Aspekt der Erfindung hergestellt wurde, vor dem Einführen von Leitungen 18 (wie Kabeln oder Rohre, siehe Fig. 10). Die Leitungsdurchführung 16 besitzt in diesem Längsschnitt drei Durchlasskanäle, die für je eine Leitung vorgesehen sind (vgl. Fig. 10). Zur Herstellung der Leitungsdurchführung 16 können beispielsweise ein Baugruppe 15 ähnlich wie in Fig. 8 sowie deren einzelne Elemente ähnlich wie in Fig. 2 bis Fig. 7 zum Einsatz kommen, sodass auf deren wiederholte Beschreibung verzichtet wird. Vor dem Einführen der Leitungen 18 sind alle Durchlasskanäle 4 durch deren Dichtungsmembranen 3 dicht verschlossen.

Fig. 10 zeigt in einem Längsschnitt die in der Wand 17 einbetonierte Leitungsdurchführung 16 der Fig. 9 nach dem Verlegen von Leitungen 18 in deren zwei von drei Durchlasskanälen 4, die in dieser Schnittansicht sichtbar sind. Wie man an der Auslenkung der jeweiligen Dichtungsmembran 3 erkennt, wurde die "dickere" Leitung 18 (links in Fig. 10) von oben eingeführt, während die rechte, dünnere Leitung 18 von der Deckenunterseite installiert wurde: Beim Einführen der Leitung 18 wurde die jeweilige Dichtungsmembran 3 durch die Leitung 18 durchstochen und dichtet sie nunmehr wie dargestellt ab, indem sie sich dicht von allen Seiten an die Leitung 18 anschmiegt.

Da die Wand 17 (hier Decke) beim Betonieren oftmals mit einem Flügelglätter bearbeitet wird, kann die Konstruktion der Leitungsdurchführung 16 in Fig. 9 und 10 an der Oberseite optional auch robuster ausgelegt werden, um einer Beschädigung der Dichtungsmembranen 3 vorzubeugen. Dies kann auf zweierlei Arten gelöst werden: Die Dichtungsmembran 3 des Hüllrohres 1 kann geringfügig in dieses versenkt angeordnet sein (vgl. Fig. 3 und zugehörige Beschreibung), damit diese nicht beschädigt wird. Alternativ oder zusätzlich kann die Montageplatte 6 so ausgelegt sein, dass sie geringfügig über jedes daran fixiertes Hüllrohr 1 übersteht (nicht dargestellt). Bei einem Kontakt mit dem Flügelglätter wird so nur die Montageplatte 6, aber nicht die Membran 3 berührt.

## Patentansprüche

1. Modulares Baukastensystem zum Herstellen und Abdichten einer Leitungsdurchführung (16), umfassend:
- mehrere Hüllrohre (1), insbesondere mit unterschiedlichen Hüllrohrdurchmessern, wobei jedes Hüllrohr (1) innenseitig einen axialen Durchlasskanal (4) zum Durchführen einer einzelnen Leitung (18) bildet und an mindestens einer seiner zwei Stirnseiten (10) durch ein Dichtelement (2) verschlossen ist, wobei das Dichtelement (2) eine durchstoßbare Dichtungsmembran (3) aufweist, die dazu ausgebildet ist, eine durch sie durchgestochene Leitung (18) von allen Seiten abdichtend zu umschließen; und
- mehrere, insbesondere paarweise identische und/oder Rand an Rand zu einer vergrößerten Fläche miteinander verbindbare Montageplatten (6), wobei jede Montageplatte (6) eine oder mehrere Aussparungen (7) aufweist und jede Aussparung (7) zur Aufnahme und einer zumindest temporären Fixierung je eines der genannten Hüllrohre (1) mit einem der Aussparung (7) entsprechenden Außendurchmesser ausgebildet ist;
- wobei die mehreren Aussparungen (7) in der jeweiligen Montageplatte (6) in Bezug auf radiale Außenabmessungen der zugehörigen Hüllrohre (1) derart angeordnet und ausgebildet sind, dass zwischen den Hüllrohren (1), die an direkt benachbarten Aussparungen (7) fixiert sind, ein Zwischenraum zum Ausfüllen durch ein Wanderzeugungsmaterial verbleibt.

2. Baukastensystem nach Anspruch 1, das
- -mehrere der genannten Montageplatten (6) umfasst, die jeweils Rand an Rand aneinander befestigbar sind und von Montageplatte (6) zu Montageplatte (6) gleich oder unterschiedlich ausgebildete Aussparungen (7) in jeweils gleicher oder unterschiedlicher Anzahl und/oder Anordnung aufweisen;
- wobei die Aussparungen (7) dieser Montageplatten (6) in Bezug auf die radialen Außenabmessungen der zugehörigen Hüllrohre (1) derart angeordnet und ausgebildet sind, dass zwischen den Hüllrohren (1), die an direkt benachbarten Aussparungen (7) von je zwei miteinander verbundenen Montageplatten (6) fixiert sind, ein Zwischenraum zum Ausfüllen durch ein Wanderzeugungsmaterial verbleibt.

3. Baukastensystem nach Anspruch 2, bei dem
- -diese Montageplatten (6) zur Befestigung aneinander jeweils mindestens ein Verbindungselement (8) aufweisen; und
- vorzugsweise jede dieser Montageplatten (6) mindestens zwei komplementär zueinander ausgebildete Verbindungselemente (8) aufweist, die in jeder Montageplatte (6) in gleicher Weise ausgebildet und angeordnet sind, sodass Verbindungselemente (8) zweier Montageplatten (6) zu deren Befestigung aneinander zu einem Formschluss durch Ineinandergreifen zu bringen sind.

4. Baukastensystem nach einem der vorhergehenden Ansprüche, bei dem
- zumindest einige der Aussparungen (7) als Durchgangsöffnungen in den Montageplatten (6) ausgebildet sind, in welche Durchgangsöffnungen die zugehörigen Hüllrohre (1) zu ihrer Fixierung an der Montageplatte (6) zumindest teilweise einsetzbar sind;
- wobei der jeweilige Durchlasskanal (4) dabei vorzugsweise von der Montageplatte (6) unverdeckt bleibt.

5. Baukastensystem nach einem der vorhergehenden Ansprüche, bei dem
- zumindest einige der Hüllrohre (1) außenseitig zumindest an einem ihrer beiden Enden eine umlaufende Schulter (13) aufweisen, die in einem vorbestimmten axialen Schulterabstand von der Stirnseite (10) des Hüllrohrs (1) angeordnet ist; und
- die zugehörigen Aussparungen (7) der Montageplatten (6) einen Innendurchmesser besitzen, der im Wesentlichen passgenau einem Außendurchmesser eines solchen zugehörigen Hüllrohrs (1) in seinem axialen Endabschnitt jenseits der Schulter (13) entspricht, sodass das Hüllrohr (1) bis zum Anschlag an der Schulter (13) in die Aussparung (7) einsetzbar ist.

6. Baukastensystem nach einem der vorhergehenden Ansprüche, insbesondere in Verbindung mit Anspruch 5, bei dem
- zumindest einige der Hüllrohre (1) innen- und/oder außenseitig ein Intumeszenzelement (5) aufweisen, das vorzugsweise als ein umlaufender Streifen aus oder mit einem Intumeszenzmaterial ausgebildet ist;
- wobei das Intumeszenzelement (5) insbesondere außenseitig in einem vorbestimmten axialen Hinterschnitts-Abstand von der jeweiligen Stirnseite (10) oder gegebenenfalls von der genannten Schulter (13) des Hüllrohrs (1) angeordnet ist.

7. Baukastensystem nach einem der vorhergehenden Ansprüche, bei dem
- zumindest bei einigen der Hüllrohre (1) die Dichtungsmembran (3) in ihrem nicht durchgestochenen Zustand mit einem vorbestimmten axialen Membran-Versatz von der zugehörigen Stirnseite (10) im Hüllrohr (1) entfernt angeordnet ist.

8. Baukastensystem nach einem der vorhergehenden Ansprüche, bei dem
- mindestens eine der Montageplatten (6) mindestens ein Befestigungselement (11) zu einer zumindest temporären Befestigung an einer Wanderzeugungsschalung (12) aufweist;
- wobei das Befestigungselement (11) insbesondere als ein Durchgangsloch zur Aufnahme eines Verbindungskörpers wie eines Nagels, einer Schraube oder eines Bolzens ausgebildet ist.

9. Baukastensystem nach einem der vorhergehenden Ansprüche, bei dem
- zumindest einige der Hüllrohre (1) zumindest an einem ihrer beiden Enden ein sich axial über die Stirnfläche des Hüllrohrs (1) hinaus um eine vorbestimmte Länge erstreckendes Auffindungselement (14), insbesondere in Form bürstenartig am Hüllrohr (1) befestigter Auffindungshaare, aufweisen; und/oder
- mindestens eine der Montageplatten (6) in einem Randbereich ihrer Fläche mindestens ein aus der Montageplattenfläche um eine vorbestimmte Länge emporragendes Auffindungselement (14), insbesondere in Form bürstenartig an der Montageplatte (6) befestigter Auffindungshaare, aufweist.

10. Baukastensystem nach einem der vorhergehenden Ansprüche, bei dem
- die Hüllrohre (1) einerseits und die zugehörigen Aussparungen (7) der Montageplatten (6) andererseits derart ausgebildet sind, dass das jeweilige Hüllrohr (1) in seinem an der Montageplatte (6) fixierten Zustand axial nicht über eine vom Hüllrohr (1) abgewandte Montageplattenoberfläche hinausragt; und
- diese Montageplattenoberfläche vorzugsweise um einen vorbestimmten axialen Schutz-Versatz über der Stirnseite (10) des daran fixierten Hüllrohrs (1) übersteht.

11. Baukastensystem nach einem der vorhergehenden Ansprüche, wobei das Baukastensystem zum Herstellen und Abdichten einer Leitungsdurchführung (16) gegen Rauch und/oder Feuer ausgelegt ist.

12. Verfahren zum Herstellen und Abdichten einer Leitungsdurchführung (16) unter Verwendung eines Baukastensystems nach einem der vorhergehenden Ansprüche, umfassend folgende Schritte:
- Auswählen eines oder mehrerer der genannten Hüllrohre (1) zumindest in der Anzahl der zu verlegenden Leitungen (18) und mit von den jeweiligen Leitungsdurchmessern abhängigen Hüllrohrdurchmessern aus dem Baukastensystem;
- Auswählen einer oder mehrerer Montageplatten (6), deren Aussparungen (7) für die ausgewählten Hüllrohre (1) ausgelegt sind, aus dem Baukastensystem;
- gegebenenfalls Verbinden einiger der ausgewählten Montageplatten (6) miteinander zu einer oder zwei identischen zusammengesetzten Montageplatte(n) mit einer kumulativ aus den miteinander verbundenen Montageplatten (6) zusammengesetzten Montageplattenfläche;
- Befestigen der ausgewählten Montageplatten (6) an einer Wanderzeugungsstruktur, insbesondere einer Schalung (12), die zur Erzeugung einer Wand (17) mit der herzustellenden Leitungsdurchführung (16) vorgesehen ist;
- Einführen der ausgewählten Hüllrohre (1) mit deren hierzu vorgesehenen Enden in die hierfür vorgesehenen Aussparungen (7) der ausgewählten Montageplatten (6);
- Eingießen eines fließfähigen und verfestigbaren Wanderzeugungsmaterials, insbesondere Betons, in die Wanderzeugungsstruktur und damit um die Hüllrohre (1) herum und in zwischen den Hüllrohren (1) vorhandenen Zwischenräume, und Verfestigen des Wanderzeugungsmaterials, wodurch eine Wand (17) mit der darin eingegossenen Leitungsdurchführung (16) in Form der einzelnen Hüllrohre (1) entsteht; und
- Einführen je einer einzigen zu verlegenden Leitung (18) in ein extra hierfür vorgesehenes Hüllrohr (1), wobei die mindestens eine Dichtungsmembran (3) des Hüllrohrs (1) von der Leitung (18) durchgestochen wird, sodass die Leitung (18) danach von allen Seiten von der durchgestochenen Dichtungsmembran (3) abdichtend umschlossen ist.

13. Verfahren nach Anspruch 12, wobei
- paarweise identische Montageplatten (6) ausgewählt werden und die Hüllrohre (1) an deren beiden Enden an den zugehörigen Aussparungen (7) der paarweise identischen Montageplatten (7) fixiert werden, bevor das Wanderzeugungsmaterial in die Wanderzeugungsstruktur eingegossen wird.

14. Verfahren nach Anspruch 12 oder 13, wobei
- die Montageplatten (6) nach der Erzeugung der Wand (17) von mindestens einem der beiden Enden der in der Wand (17) eingegossenen Hüllrohre (1) entfernt werden.

15. Leitungsdurchführung (16) in einer Wand (17), die durch ein Verfahren nach einem der Ansprüche 12 bis 14 hergestellt wurde, wobei
- wenn die Leitungsdurchführung (16) mehrere Hüllrohre (1) umfasst, die Hüllrohre (1) jeweils durch Zwischenräume voneinander getrennt sind, die vom verfestigten Wanderzeugungsmaterial ausgefüllt sind.
